**Europäisches Patentamt**

**European Patent Office**

**Office européen des brevets**

(19)

(11) Veröffentlichungsnummer : **0 062 216 B1**

(12)

# EUROPÄISCHE PATENTSCHRIFT

(45) Veröffentlichungstag der Patentschrift :
**18.06.86**

(21) Anmeldenummer : **82102350.4**

(22) Anmeldetag : **22.03.82**

(51) Int. Cl.⁴ : **B 31 B 25/00, B 31 B 23/00, B 31 D 1/00, B 31 F 5/02, A 47 J 31/08// B31F5/02**

(54) **Verfahren zur Herstellung von trichterförmigen Filtereinsätzen mit einer Öffnungshilfe sowie Vorrichtung zur Durchführung dieses Verfahrens.**

(30) Priorität : **07.04.81 DE 3113951**

(43) Veröffentlichungstag der Anmeldung :
**13.10.82 Patentblatt 82/41**

(45) Bekanntmachung des Hinweises auf die Patenterteilung : **18.06.86 Patentblatt 86/25**

(84) Benannte Vertragsstaaten :
**AT BE CH FR GB IT LI NL SE**

(56) Entgegenhaltungen :
**DE-C- 951 543**
**FR-A- 2 208 335**
**FR-A- 2 349 438**
**GB-A- 1 038 243**
**US-A- 1 503 155**
**US-A- 3 437 540**

(73) Patentinhaber : **Gawarecki, Herbert**
**Albert-Schweitzer-Strasse 12**
**D-4358 Haltern-Flaesheim (DE)**

(72) Erfinder : **Gawarecki, Herbert**
**Albert-Schweitzer-Strasse 12**
**D-4358 Haltern-Flaesheim (DE)**

(74) Vertreter : **Eichelbaum, Lambert, Dipl.-Ing.**
**Michaelstrasse 4**
**D-4350 Recklinghausen 2 (DE)**

## Beschreibung

Die Erfindung betrifft ein Verfahren zur Herstellung von trichterförmigen Filtereinsätzen mit einer Öffnungshilfe zur Zubereitung von Aufbrühgetränken, bei dem eine Filtermaterialbahn nach ihrem Abzug von einer Materialrolle kontinuierlich rotativ in bestimmten Abständen zur Ausführung der Öffnungshilfe gelocht, hiernach über ihre gesamte Länge gefaltet, sodann in bestimmten Abständen mit Prägungen zur Zusammenklettung, an z. B. einer Boden- und einer Seitenkante, der Filtereinsätze versehen und schließlich zur Herauslösung der Filtereinsätze geschnitten wird.

Bei einem durch offenkundige Vorbenutzung bekanntgewordenen Verfahren dieser Art weist der damit gefertigte Filtereinsatz eine trapezoedale Form auf, der an einer Boden- und an einer Seitenkante durch eine Prägung zusammengehalten wird, wohingegen die zweite Seitenkante aus einer Faltkante besteht. Die Öffnungshilfe wird von einem halbkreisförmigen Überstand gebildet, der über die im wesentlichen bogenförmig verlaufende Filtereinsatzseite hinausragt. Diese Art der Filtereinsätze hat sich in der Praxis bewährt. Schwierig ist jedoch, mit einem solchen Verfahren die Produktionsziffern der auf diese Weise gefertigen Filtereinsätze zu erhöhen. Einem solchen Streben sind aufgrund der Massenträgheitsmomente der einzelnen Maschinenelemente einerseits sowie der begrenzten Zugfestigkeit der Materialbahn relativ enge Grenzen gesetzt. Hinzu kommt, daß eine Erhöhung der Produktionsziffer zwangsläufig mit einer erhöhten Geschwindigkeit und damit mit einer erhöhten dynamischen Belastung der einzelnen Maschinenelement verknüpft ist. Eine erhöhte Belastung wiederum bedeutet einen erhöhten Verschleiß und damit eine geringere Lebensdauer der betreffenden Fertigungsvorrichtung. Ein Verfahren der oben erwähnten Art ist auch aus der FR-A-2 349 438 bekannt.

Von diesem Stand der Technik ausgehend liegt der Erfindung die Aufgabe zugrunde, ein Verfahren der eingangs genannten Art zu schaffen, mit welchem ohne Erhöhung der dynamischen Belastung der Materialbahn einerseits und der Fertigungsvorrichtung andererseits gleichwohl eine erhebliche Erhöhung der Produktivität möglich ist.

Diese Aufgabe wird erfindungsgemäß dadurch gelöst, daß eine zweite Filtermaterialbahn zunächst kongruent zur ersten Filtermaterialbahn geführt und gemeinsam mit ihr gelocht wird, daß hiernach die gelochten Filtermaterialbahnen auseinandergezogen, getrennt gefaltet und getrennt mit Prägungen versehen werden, und daß sie hiernach wiederum kongruent zusammengeführt und gemeinsam geschnitten werden. Mit einem solchen Verfahren ist es nicht nur möglich, selbst bei geringerer Transportgeschwindigkeit der beiden Materialbahnen gleichwohl eine erhebliche Erhöhung der Produktionsziffer der damit gefertigten Filtereinsätze zu schaffen, sondern bei gleicher Geschwindigkeit dieses Verfahrens zum vorbekannten Verfahren wird sogar eine Verdoppelung der Produktionsziffer erzielt. Durch die volle Integration von teilweise getrennt durchzuführenden Fertigungsvorgängen in den Gesamtfertigungsvorgang wird ein optimales Ergebnis erzielt. Das ist insofern überraschend, wie zwei räumliche Gebilde von Filtereinsätzen in verschiedenen Materialbahnen exakt zur Lochung zusammengeführt, hiernach wiederum voneinander getrennt und nach der Prägung wiederum exakt aufeinanderliegend von einer einzigen Schneidvorrichtung gemeinsam geschnitten werden.

Nach einer vorteilhaften Weiterbildung der Erfindung werden die Materialbahnen nach Versehung mit den Prägungen mit ihren die Öffungshilfe aufweisenden Seiten der Filtereinsätze aneinander gelegt.

Ferner werden die Materialbahnen im Augenblick ihres Abzuges von den Faltvorrichtungen mit den Prägungen versehen. Dadurch kann eine zusätzliche Abzugseinrichtung aus einem oder mehreren Transportwalzenpaaren entbehrlich werden, wodurch der Gesamttransportweg verkürzt wird.

Bekannte Vorrichtungen zur Durchführung des gattungsgemäßen Verfahrens weisen eine rotative Lochstanze, eine Faltvorrichtung, eine Präge- und eine Schnitteinrichtung auf. Eine neue Vorrichtung zur Durchführung der erfindungsgemäßen Verfahrens ist dadurch gekennzeichnet, daß zwischen den Materialrollen einerseits und der rotativen Lochstanze andererseits eine mehrere Rollenpaare aufweisende Bahnkanten-Steuerungseinrichtung und nach der Lochstanze oberhalb und unterhalb der Transportebene der beiden kongruent geführten Materialbahnen je eine Faltvorrichtung angeordnet sind. Dabei sorgt die Bahnkanten-Steuerungseinrichtung für einen exakt kongruenten Zulauf der beiden zunächst getrennten Materialbahnen zu der Lochstanze, an welcher beide Materialbahnen gemeinsam in einem einzigen Stanzvorgang mit den entsprechenden Lochungen für die Anfertigung der Öffnungshilfe versehen werden. Hiernach werden die beiden nunmehr gelochten Materialbahnen in eine etwa senkrecht zur Transportebene verlaufenden Ebene auseinandergezogen und in getrennt angeordneten Faltvorrichtungen gefaltet. Dabei befindet sich die Faltvorrichtung für die oben liegende Materialbahn oberhalb und die Faltvorrichtung für die unten liegende Materialbahn unterhalb der Transportebene an etwa gleicher Stelle. Hiernach sind die in an sich bekannter Weise aus je einem Prägewalzenpaar bestehenden Prägeeinrichtungen angeordnet, die zugleich eine Abzugsvorrichtung der gefalteten Materialbahnen von der Faltvorrichtung bilden.

Das neue Verfahren wird nachfolgend anhand einer Zeichnung beschrieben, auf welcher eine schematische, perspektivische Ansicht der erfindungsgemäßen Vorrichtung abgebildet ist.

Die neue Vorrichtung 1 besteht im wesentlichen aus zwei Abrollvorrichtungen 2, 3, auf denen sich jeweils eine Materialrolle 4, 5 befindet. Hieran schließt sich eine global mit der Bezugsziffer 6 versehene Bahnkanten-Steuerungseinrichtung an, zu der u. a. die Walzenpaare 7, 8 sowie die Einzelwalzen 9, 10 gehören.

In Transportrichtung des Pfeiles 11 ist hinter der Bahnkanten-Steuerungseinrichtung 6 eine Lochstanze 12 angeordnet. Hinter der Lochstanze 12 befindet sich ein Walzenpaar 13, welches in Richtung des Doppelpfeiles 14 bewegbar ist, um Zuordnungsunterschiede der oberen Materialbahn 15 zur unteren Materialbahn 16 ausgleichen zu können. Oberhalb der etwa in Richtung des Doppelpfeiles 14 befindlichen Transportebene ist die Faltvorrichtung 17 und unterhalb der Transportebene die zweite Faltvorrichtung 18 angeordnet. Diese Faltvorrichtungen bestehen im wesentlichen aus einem Brett mit dreieckförmiger Spitze, über welche exakt die Mitte einer jeden Materialbahn 15, 16 gezogen und dadurch gefaltet wird. Der Spitze dieses Brettes ist unmittelbar jeweils ein Faltstangenpaar 19, 20 zugeordnet, durch welche die gefaltete obere und untere Materialbahn 15, 16 gezogen wird. In Transportverlauf unmittelbar hinter diesen Faltstangenpaaren 19, 20 ist jeweils ein Prägewalzenpaar 21, 22 angebracht. Die beiden Prägewalzenpaare 21, 22 dienen im vorliegenden Fall gleichzeitig als Abzugswalzen der gefalteten Papierbahn von den Faltvorrichtungen 17, 18, 19, 20. Die getrennt mit den erforderlichen Prägungen an jeweils einer Seitenkante 23, und an der Bodenkante 24 versehenen Filtereinsätze 25 der Filtermaterialbahnen 15, 16 werden sodann wieder zusammengeführt und gemeinsam von dem Schnittwalzenpaar 26 geschnitten. Die ungeschnittene Kante 27 der Filtereinsätze entspricht der Faltkante der beiden Materialbahnen 15, 16.

Nach dem Schnitt werden die einzelnen Filtereinsätze 25 vom verbleibenden Abfallrest 28 der oberen und der unteren Materialbahnen 15, 16 getrennt. Die Vorrichtung, mit der dieser Verfahrensgang durchgeführt wird, ist schematisch mit der Bezugsziffer 29 versehen. Danach werden die kongruent aufeinanderliegenden Filtereinsätze voneinander getrennt und dabei in gleichmäßigem Abstand zueinander aufgefächert. Dieser Vorgang wird als Schuppen bezeichnet. Nach der Schuppung werden die einzelnen Filtereinsätze 25 einer nicht dargestellten Verpackungseinrichtung zugeführt.

Durch das Zusammenführen zweier Materialbahnen 15, 16, deren erneutes Trennen zum Falten und Prägen und deren endgültige Zusammenführung zum Schneiden, Trennen des Abfallrestes und Schuppen der Filtereinsätze, wird ein Verfahren geschaffen, durch welches selbst bei verminderten Produktionsgeschwindigkeiten gegenüber dem einbahnigen Verfahren eine erhöhte Produktionsziffer erzielt wird. Bei zum einbahnigen Verfahren gleicher Transportgeschwindigkeit der Materialbahnen ergibt sich sogar eine Verdoppelung der Produktionsziffer. Dabei ist wesentlich, daß nunmehr innerhalb eines relativ großen Bereiches der Produktionsziffer das neue Verfahren und auch die neue Vorrichtung an entsprechende Produktionswünsche elastisch angepaßt werden kann. Dabei bedeutet eine geringere Produktionsgeschwindigkeit gleichzeitig auch eine größere Lebensdauer der gesamten Vorrichtung.

Dabei ist sowohl das Verfahren als auch die Vorrichtung im wesentlichen dadurch gekennzeichnet, daß sämtliche Fertigungsvorgänge, die für beide Materialbahnen 15, 16 gemeinsam durchgeführt werden können, auch tatsächlich gemeinsam erfolgen, und daß lediglich diejenigen Fertigungsvorgänge, die aufgrund des neuen Verfahrens nicht gemeinsam durchgeführt werden können, getrennt erfolgen. In diesem Sinne bedeutet es eine verschlechterte Nachahmung der Erfindung, wenn beispielsweise einer jeden Materialbahn 15, 16 eine eigene Lochstanze und eigene Schnittwalzen 26 zugeordnet werden.

Die Erfindung wurde vorstehend am Beispiel eines zweibahnigen Verfahrens beschrieben. Es versteht sich jedoch, daß erfindungsgemäß auch ein Verfahren mit drei und mehr Materialbahnen möglich ist, zumal ein solches stets mindestens auch ein zweibahniges Verfahren enthält.

Stückliste

« Verfahren zur Herstellung von trichterförmigen Filtereinsätzen mit einer Öffnungshilfe sowie Vorrichtung zur Durchführung dieses Verfahrens »

| | | | | | |
|---|---|---|---|---|---|
| Gesamt-Vorrichtung | 1 | | | | |
| Abrollvorrichtung | 2 | 3 | | | |
| Materialrolle | 4 | 5 | | | |
| Bahnkanten-Steuerungs-einrichtung | 6 | | | | |
| Walzenpaar | 7 | 8 | 13 | | |
| Einzelwalze | 9 | 10 | | | |
| Pfeil | 11 | | | | |

# 0 062 216

| Lochstanze | 12 | | | | |
|---|---|---|---|---|---|
| Doppelpfeil | 14 | | | | |
| obere Materialbahn | 15 | | | | |
| untere Materialbahn | 16 | | | | |
| Faltvorrichtung | 17 | 18 | 19 | 20 | |
| Prägewalzenpaar | 21 | 22 | | | |
| Seitenkante | 23 | | | | |
| Bodenkante | 24 | | | | |
| Filtereinsatz | 25 | | | | |
| Schnittwalzenpaar | 26 | | | | |
| ungeschnittene Kante des Filtereinsatzes | 27 | | | | |
| Abfallrest | 28 | | | | |
| Vorrichtung | 29 | | | | |

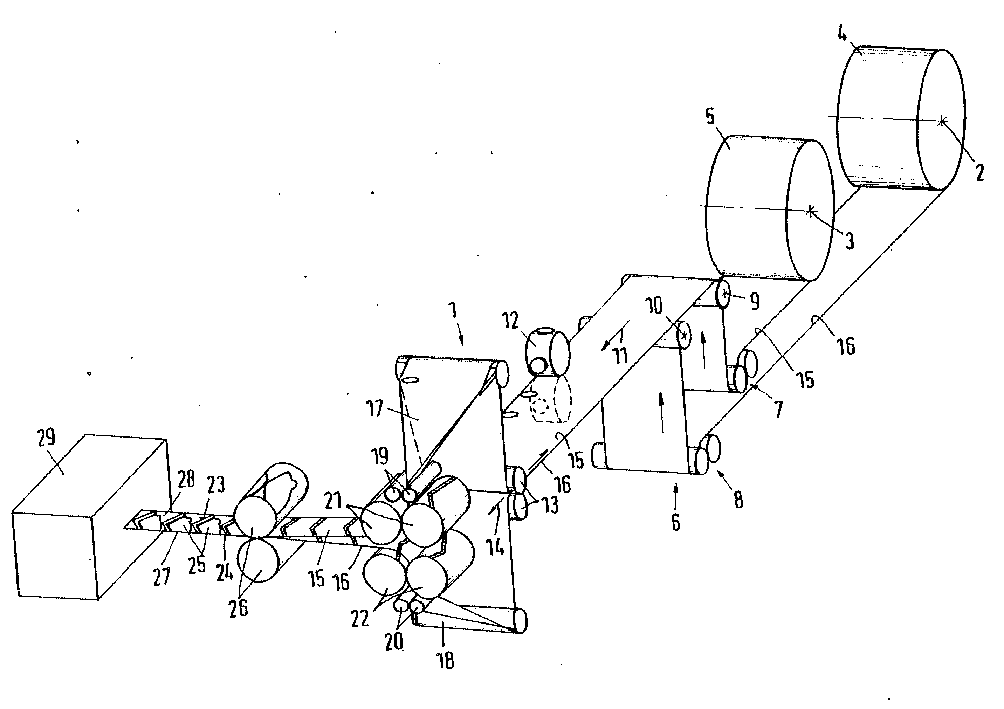

**Patentansprüche**

1. Verfahren zur Herstellung von trichterförmigen Filtereinsätzen mit einer Öffnungshilfe zur Zubereitung von Aufbrühgetränken, bei dem eine Filtermaterialbahn (15) nach ihrem Abzug von einer Materialrolle (5) kontinuierlich rotativ in bestimmten Abständen zur Ausführung der Öffnungshilfe gelocht, hiernach über ihre gesamte Länge gefaltet, sodann in bestimmten Abständen mit Prägungen zur Zusammenklettung, an z. B. einer Boden- und einer Seitenkante (24, 23), der Filtereinsätze (25) versehen und schließlich zur Herauslösung der Filtereinsätze geschnitten wird, dadurch gekennzeichnet, daß eine zweite Filtermaterialbahn (16) zunächst kongruent zur ersten Filtermaterialbahn (15) geführt und gemeinsam mit ihr gelocht wird, daß hiernach die gelochten Filtermaterialbahnen (15, 16) auseinandergezogen, getrennt gefaltet und getrennt mit Prägungen versehen werden, und daß sie hiernach wiederum kongruent zusammengeführt und gemeinsam geschnitten werden.

2. Verfahren nach Anspruch 1, dadurch gekennzeichnet, daß die Materialbahnen (15, 16) nach Versehung mit den Prägungen mit ihren die Öffnungshilfen aufweisenden Seiten der Filtereinsätze aneinander gelegt werden.

3. Verfahren nach Anspruch 1 oder 2, dadurch gekennzeichnet, daß die Materialbahnen im Augenblick ihres Abzuges von den Faltvorrichtungen (17, 18) mit den Prägungen versehen werden.

4. Verfahren nach den Ansprüchen 1 bis 3, dadurch gekennzeichnet, daß nach dem Schneiden der beiden Filtermaterialbahnen (15, 16) die einzelnen Filtereinsätze gemeinsam vom verbleibenden Abfallrest der Materialbahnen getrennt werden.

5. Verfahren nach Anspruch 4, dadurch gekennzeichnet, daß die fertigen Filtereinsätze gemeinsam zueinander geschuppt und sodann einer Verpackungseinrichtung zugeführt werden.

6. Vorrichtung zur Durchführung des Verfahrens nach den Ansprüchen 1 bis 5 mit einer rotativen Lochstanze (12), einer Faltvorrichtung (17, 18), einer Präge- (21, 22) und einer Schnitteinrichtung (26), dadurch gekennzeichnet, daß zwischen den Materialrollen (4, 5) einerseits und der rotativen Lochstanze (12) andererseits eine mehrere Rollenpaare (7, 8, 9, 10) aufweisende Bahnkanten-Steuerungseinrichtung (6) und nach der Lochstanze (12) oberhalb und unterhalb der Transportebene der beiden kongruent geführten Materialbahnen (15, 16) je eine Faltvorrichtung (17, 18) angeordnet sind.

7. Vorrichtung nach Anspruch 6, dadurch gekennzeichnet, daß die in an sich bekannter Weise aus je einem Prägelwalzenpaar (21, 22) bestehenden Prägeeinrichtungen zugleich Abzugsvorrichtungen der gefalteten Materialbahnen (15, 16) von den Faltvorrichtungen (17, 18) bilden.

**Claims**

1. Process for the manufacture of funnel-shaped filter inserts with an easy-opening arrangement, for the preparation of brewed drinks, in which a strip (15) of filter material, after its withdrawal from a roll (5) of material, is continuously rotatively perforated at predetermined intervals, to produce the easy opening arrangements, is subsequently folded along its entire length, is then provided at predetermined intervals with stamped protuberances for attachment together, for example at a bottom edge and at a side edge (24, 23) of the filter inserts (25) and finally is severed so as to separate the filter inserts, characterised in that a second strip (16) of filter material is first guided congruently with the first strip (15) of filter material and is perforated together with it, the perforated filter material strips (15, 16) are subsequently pulled apart from one another, separately folded and separately provided with stamped protuberances and that they are then drawn congruently together again and jointly severed.

2. Process according to claim 1, characterised in that the strips (15, 16) of material are applied to one another, with the sides of the filter inserts having the easy-opening arrangements laid together, after provision of the stamped protuberances.

3. Process according to claim 1 or 2, characterised in that the strips of material are provided with the stamped protuberances at the moment of their being pulled from the folding devices (17, 18).

4. Process according to claims 1 to 3, characterised in that, after severing the two strips (15, 16) of filter material the individual filter inserts are together separated from the remaining waste part of the strips of material.

5. Process according to claim 4, characterised in that the finished filter inserts are assembled together and then led to packaging device.

6. Apparatus for carrying out the process according to claims 1 to 5, with a rotative perforating die (12), a folding device (17, 18), a stamping arrangement (21, 22) and a severing arragement (26), characterised in that, between the rolls (4, 5) of material on the one hand and the rotative perforating die (12) on the other hand, a strip edge control arrangement (6), having a plurality of pairs of rollers (7, 8, 9, 10) is arranged and that, after the perforating die (12), folding arrangements (17, 18) are arranged respectively above and below the plane of transport of the two congruently-guided strips (15, 16) of material.

7. Apparatus according to claim 6, characterised in that the stamping arrangements, each comprising a pair (21, 22) of stamping rollers in a manner known per se, also form devices for drawing the folded stips (15, 16) of material from the folding devices (17, 18).

**Revendications**

1. Procédé de fabrication de garnitures de filtre en forme d'entonnoir comportant un dispositif facilitant l'ouverture pour la préparation de boissons chaudes dans lequel une bande de matériel filtrant (15) est, après son déroulement à partir d'un rouleau de matériel (5), perforé d'une manière continue par rotation à des intervalles déterminés pour la réalisation du dispositif facilitant l'ouverture, puis pliée sur toute sa longueur, puis munie, à des intervalles déterminés, d'empreintes permettant l'adhérence des garnitures de filtre (25), par exemple à un bord de fond ou de côté (23, 24), et finalement coupée pour le dégagement des garnitures de filtre, caractérisé en ce qu'une deuxième bande de matériel (16) est d'abord guidée de manière à rejoindre la première bande (15) et est ensuite perforée en même temps qu'elle, qu'ensuite les bandes de matériel filtrant (15, 16) sont séparées, pliées séparément et munies séparément d'empreintes et en ce qu'ensuite elles sont réunies de nouveau et coupées ensemble.

2. Procédé selon la revendication 1, caractérisé en ce que les bandes de matériel (15, 16), après avoir été munies d'empreintes, sont appliquées l'une contre l'autre par les côtés des garnitures de filtre qui comportent un dispositif facilitant l'ouverture.

3. Procédé selon l'une des revendications 1 ou 2, caractérisé en ce qu'au moment de leur retrait hors du dispositif de pliage (17, 18) les bandes de matériel sont munies d'empreintes.

4. Procédé selon l'une des revendications 1 à 3, caractérisé en ce qu'après la coupe des deux bandes de matériel de filtre (15, 16) les différentes garnitures de filtre sont séparées ensemble du reste des bandes de matériel.

5. Procédé selon la revendication 4, caractérisé en ce que les garnitures de filtre terminées sont empilées ensemble et ensuite envoyées à un dispositif d'emballage.

6. Dispositif pour l'application du procédé selon l'une des revendications 1 à 5 comportant une poinçonneuse rotative (12), un dispositif de pliage (17, 18), un dispositif à empreindre (21, 22) et un dispositif de coupe (26), caractérisé en ce qu'entre les rouleaux à matériel (4, 5) d'une part et la poinçonneuse rotative (12) d'autre part il comprend un dispositif (6) de commande de bords de bande

**0 062 216**

comportant plusieurs paires de rouleaux (7, 8, 9, 10) et, après la poinçonneuse (12), au-dessus et au-dessous du plan de transport des deux bandes de matériel (15, 16) qui vont se rejoindre, des dispositifs de pliage (17, 18).

7. Dispositif selon la revendication 6, caractérisé en ce que les dispositifs à empreindre qui sont constitués chacun, d'une manière connue, par une paire de cylindres à empreindre (21, 22) constituent en même temps des dispositifs d'extraction, hors des dispositifs de pliage (17, 18), des bandes de matériel (15, 16) pliées.